# DEMANDE DE BREVET EUROPEEN

(11) **EP 4 541 615 A1**
(43) Date de publication de la demande: **23.04.2025**
(21) Numéro de dépôt: 24205986.3
(22) Date de dépôt: 10.10.2024
(51) Int. Cl.: B60H 1/34

(54) **AERATEUR POUR HABITACLE DE VEHICULE AUTOMOBILE**

(30) Priorité: 16.10.2023 FR 2311154
(71) Demandeur: NOVARES France, 78140 Vélizy-Villacoublay (FR)
(72) Inventeur: VOGEL, Rudolf, 06493 Ballenstedt (DE); SCHMIDT, Viktor, 32549 Bad Oeynhausen (DE)
(74) Mandataire: Germain Maureau

(57) **Abrégé**

Unité (20a, 20b, 20c, 20d) d'orientation d'un flux d'air utilisable dans un aérateur pour habitacle de véhicule, comprenant une série d'ailettes de conduite d'air (261, 262, 263) disposées de manière sensiblement parallèles entre elles et écartées les unes des autres, les ailettes de conduite d'air (261, 262, 263) formant une structure (26) d'un seul tenant qui est logée à l'intérieur d'un corps cylindrique (22) creux et reliée de manière pivotante à ce dernier de telle sorte qu'elles pivotent autour d'un premier axe de pivotement, le corps cylindrique (22) pouvant pivoter autour d'un deuxième axe de pivotement sous l'action d'un moteur (14), dans laquelle une coque externe entoure au moins partiellement le corps cylindrique (22), ladite coque externe étant munie d'une rainure de guidage sur un pourtour périphérique interne, ladite rainure de guidage définissant un profil de came, et dans laquelle un pion de manœuvre solidaire de l'une des ailettes de conduite d'air (261, 262, 263) est reçu de manière coulissante à l'intérieur de la rainure de guidage de telle sorte que, lors du pivotement du corps cylindrique (22) autour du deuxième axe de pivotement, le pion de manœuvre suit le profil de came, provoquant ainsi le pivotement de la structure (26) d'un seul tenant autour du premier axe de pivotement.

## Description

L'invention concerne un aérateur pour habitacle de véhicule automobile.

Les aérateurs servent à alimenter en air frais ou en air chaud l'habitacle d'un véhicule automobile. Ils sont généralement situés sur le tableau de bord et peuvent être commandés manuellement de manière à obtenir le flux d'air souhaité. L'utilisateur peut en général régler le débit d'air, la température de l'air ou la direction du flux d'air au moyen de boutons ou curseurs présents sur une console centrale, ou un élément de planche de bord ou sur l'aérateur lui-même. Ce type d'aérateurs à commande manuelle présente toutefois l'inconvénient de nécessiter une action systématique d'un opérateur si le débit d'air, la température de l'air et/ou la direction du flux d'air doit être modifiée. Or, dans le cas où l'opérateur est le conducteur lui-même, cela peut entrainer des erreurs d'inattention de sa part qui peuvent être dangereuses et aboutir, dans certains cas, à des accidents graves.

A cet effet, certains véhicules automobiles sont parfois équipés d'aérateurs à commande motorisée, dans lesquels le flux d'air à la sortie de l'aérateur suit une trajectoire définie à l'avance. Cette trajectoire est en général optimisée pour conférer un meilleur confort de conduite pour le conducteur et les passagers du véhicule.

Généralement, les aérateurs à commande motorisée nécessitent deux moteurs pour réaliser un contrôle régulé du déplacement de deux rangées d'ailettes de guidage d'air pivotant respectivement autour d'axes de pivotement vertical et horizontal. L'utilisation de deux moteurs génèrent toutefois des coûts élévés de fabrication et nécessitent une énergie électrique suffisante pour leur fonctionnement.

L'invention vise donc à proposer un aérateur ne présentant pas les inconvénients précités. En particulier, l'invention vise à proposer un aérateur à commande motorisée générant des coûts de fabrication moindres et consommant moins d'énergie électrique durant son fonctionnement.

A cet effet, l'invention concerne une unité d'orientation d'un flux d'air utilisable dans un aérateur pour habitacle de véhicule, comprenant une série d'ailettes de conduite d'air disposées de manière sensiblement parallèles entre elles et écartées les unes des autres, les ailettes de conduite d'air formant une structure d'un seul tenant qui est logée à l'intérieur d'un corps cylindrique creux et reliée de manière pivotante à ce dernier de telle sorte qu'elles pivotent autour d'un premier axe de pivotement, le corps cylindrique pouvant pivoter autour d'un deuxième axe de pivotement sous l'action d'un moteur, dans laquelle une coque externe entoure au moins partiellement le corps cylindrique, ladite coque externe étant munie d'une rainure de guidage sur un pourtour périphérique interne, ladite rainure de guidage définissant un profil de came, et dans laquelle un pion de manoeuvre solidaire de l'une des ailettes de conduite d'air est reçu de manière coulissante à l'intérieur de la rainure de guidage de telle sorte que, lors du pivotement du corps cylindrique autour du deuxième axe de pivotement, le pion de manoeuvre suit le profil de came, provoquant ainsi le pivotement de la structure d'un seul tenant autour du premier axe de pivotement.

Ainsi configurée, l'unité d'orientation d'un flux d'air selon l'invention permet de contrôler le pivotement d'une série d'ailettes de guidage autour de deux axes de pivotement au moyen d'un unique moteur, réduisant ainsi le coût de fabrication et la consommation électrique d'une telle unité.

Selon d'autres caractéristiques, l'unité selon l'invention comporte une ou plusieurs des caractéristiques optionnelles suivantes considérées seules ou en combinaison :
- le corps cylindrique est muni sur un pourtour périphérique externe d'une couronne dentée, ladite couronne dentée étant apte à interagir avec une roue dentée mue en rotation par le moteur de manière directe ou via un engrenage de manière à provoquer un déplacement pivotant du corps cylindrique autour du deuxième axe de pivotement.
- la coque externe possède une forme cylindrique.
- la coque externe est formée d'une partie supérieure et d'une partie inférieure, lesdites parties supérieure et inférieure étant reliées ensemble au niveau d'un bord inférieur de la partie supérieure et d'un bord supérieur de la partie inférieure.
- le bord inférieur de la partie supérieure et le bord supérieur de la partie inférieure possèdent une forme complémentaire de telle sorte que les parties supérieure et inférieure s'emboitent l'une dans l'autre.
- la rainure de guidage s'étend de part et d'autre du bord inférieur de la partie supérieure et du bord supérieur de la partie inférieure.
- la rainure de guidage possède une forme sensiblement sinusoïdale, la rainure de guidage oscillant autour d'un cercle formant une ligne directrice pour la forme cylindrique définie par la coque externe.
- le corps cylindrique est muni d'une fente dans laquelle est logée partiellement le pion de manoeuvre, le pion de manoeuvre possédant une portion d'extrémité dépassant du pourtour périphérique externe du corps cylindrique, ladite portion d'extrémité étant en contact avec au moins l'un des bords de la rainure de guidage.

L'invention concerne également un aérateur pour habitacle de véhicule automobile comprenant :
- un boîtier possédant au moins une ouverture d'entrée d'air et au moins une ouverture de sortie d'air et à travers lequel circule un flux d'air,
- des moyens d'orientation aptes à orienter le flux d'air selon au moins une direction de sortie,
dans lequel les moyens d'orientation comprennent au moins une unité d'orientation d'un flux d'air telle que définie précédemment.

Selon d'autres caractéristiques, l'aérateur selon l'invention comporte une ou plusieurs des caractéristiques optionnelles suivantes considérées seules ou en combinaison :
- les moyens d'orientation comprennent plusieurs unités d'orientation d'un flux d'air telles que définies précédemment.
- le corps cylindrique de chacune des unités d'orientation d'un flux d'air est muni sur un pourtour périphérique externe d'une couronne dentée, ladite couronne dentée étant apte à interagir avec une roue dentée mue en rotation par un moteur de manière directe ou via un engrenage formé par une succession d'une roue dentée s'engrenant avec une couronne dentée d'une autre unité d'orientation d'un flux d'air de manière à provoquer un déplacement pivotant simultané des corps cylindriques de l'ensemble des unités d'orientation d'un flux d'air au moyen d'un unique moteur.
- le boîtier comprend au moins une paroi déflectrice apte à recevoir un flux d'air en provenance d'au moins une unité d'orientation d'un flux d'air et à réorienter ce flux d'air selon au moins une direction de sortie.
- le boîtier comprend une paroi déflectrice supérieure et une paroi déflectrice inférieure, ladite paroi déflectrice supérieure, respectivement inférieure, étant apte à recevoir un flux d'air montant, respectivement descendant, en provenance d'au moins une unité d'orientation d'un flux d'air et à réorienter ce flux d'air selon une direction de sortie orientée vers le bas, respectivement orientée vers le haut.

L'invention concerne également un véhicule automobile comprenant un aérateur tel que défini ci-dessus.

L'invention sera davantage comprise à la lecture de la description non limitative qui va suivre, faite en référence aux figures ci-annexées.
[Fig. 1] est une vue de dessus d'un aérateur selon l'invention.
[Fig. 2] est une vue de face de l'aérateur de la figure 1.
[Fig. 3] est une vue en perspective éclatée de l'aérateur de la figure 1.
[Fig. 4] est une vue en coupe transversale selon le plan de coupe A-A représenté sur la figure 1, les ailettes de conduite d'air étant orientées vers le haut.
[Fig. 5] est une vue en coupe transversale selon le plan de coupe B-B représenté sur la figure 2, les ailettes de conduite d'air étant orientées vers la droite.
[Fig. 6] est une vue de dessus d'une unité d'orientation d'un flux d'air équipant l'aérateur de la figure 1.
[Fig. 7] est une vue en perspective éclatée de l'unité d'orientation d'un flux d'air de la figure 6.
[Fig. 8] est une vue en coupe transversale selon le plan de coupe D-D représenté sur la figure 6.
[Fig. 9] est une vue en coupe transversale selon le plan de coupe E-E représenté sur la figure 8.
[Fig. 10a] est une vue de face de l'unité d'orientation d'un flux d'air de la figure 6, selon une première orientation des ailettes de conduite d'air.
[Fig. 10b] est une vue similaire à la figure 10a, selon une deuxième orientation des ailettes de conduite d'air.
[Fig. 10c] est une vue similaire à la figure 10a, selon une troisième orientation des ailettes de conduite d'air.
[Fig. 10d] est une vue similaire à la figure 10a, selon une quatrième orientation des ailettes de conduite d'air.
[Fig. 11a] est une vue partielle en coupe transversale selon le plan de coupe C-C représenté sur la figure 1, le corps cylindrique étant dans une première position de butée.
[Fig. 11b] est une vue similaire à la figure 11a, le corps cylindrique étant dans une deuxième position de butée.

Dans les paragraphes suivants, les termes horizontal, vertical, haut, bas, avant et arrière, gauche et droite font référence à des orientations de flux d'air pour un aérateur installé face au siège avant conducteur d'un habitacle de véhicule automobile. Ainsi, un flux d'air sortant d'un tel aérateur sera dirigé vers l'avant et vers le haut si le conducteur désire ventiler préférentiellement sa tête, et vers la droite s'il désire ventiler préférentiellement la partie gauche de son visage. Les termes avant/arrière, et gauche/droite font donc référence dans ce cas à des orientations contraires à celles de l'orientation normale du véhicule.

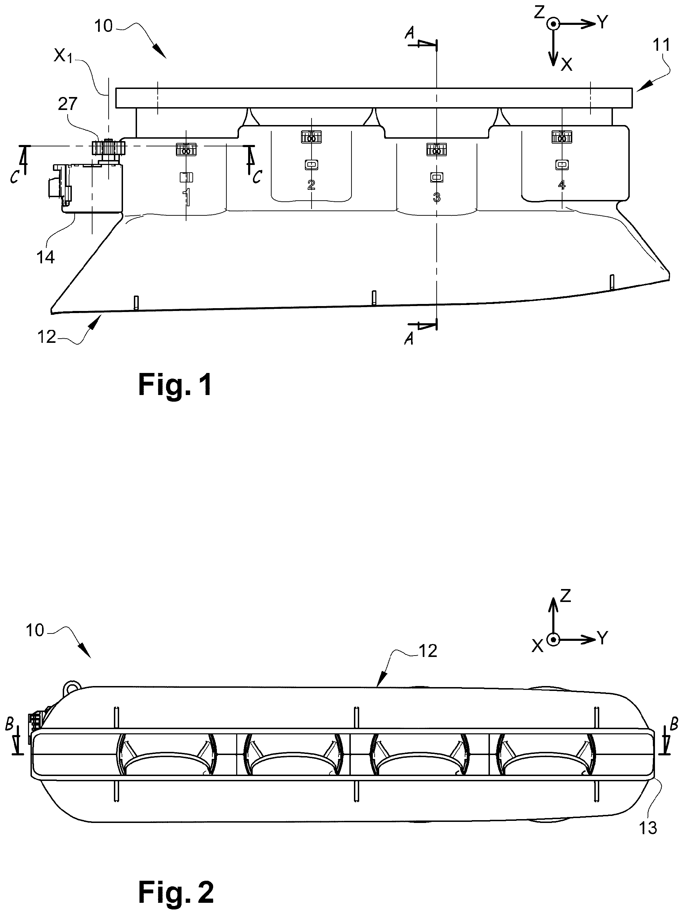

En référence aux figures 1 à 3, il est représenté un aérateur 10 conforme à l'invention. Cet aérateur 10 comprend un boîtier 12 relié sur sa face arrière à une conduite (non représentée) alimentant en air l'aérateur. Le boîtier 12 s'étend le long d'une direction longitudinale alignée sur la direction avant/arrière X du véhicule et comprend notamment une partie supérieure 12s et une partie inférieure 12i, les parties supérieure et inférieure étant reliées ensemble, par exemple par clippage. Les parties supérieure et inférieure 12s, 12i possèdent une forme identique ou sensiblement identique. Chacune des parties 12s, 12i comporte notamment une portion arrière, respectivement 121 et 121', sur laquelle vient se fixer une structure annulaire arrière 11 définissant une ouverture d'entrée 111 pour le flux d'air, et une portion avant, respectivement 122 et 122', sur laquelle vient se fixer une structure annulaire avant 13 définissant une ouverture de sortie 131 pour le flux d'air.

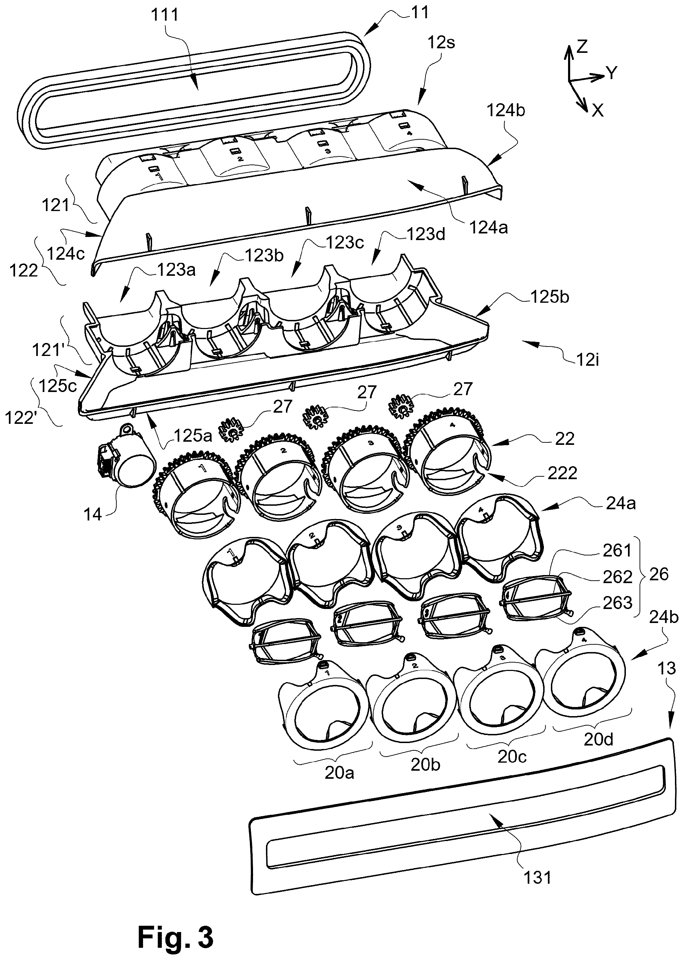

Comme représenté sur la figure 3, la portion avant 122 de la partie supérieure 12s est définie par une paroi supérieure 124a, et par deux parois latérales gauche et droite 124b et 124c. De façon similaire, la portion avant 122' de la partie inférieure 12i est définie par une paroi inférieure 125a, et par deux parois latérales gauche et droite 125b et 125c.

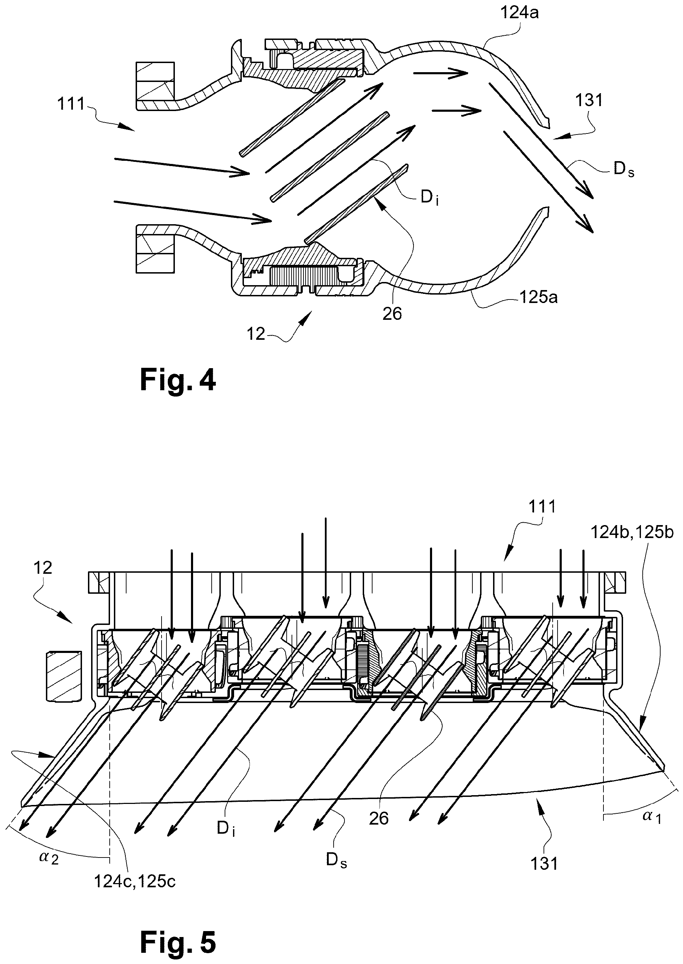

Comme représentée sur la figure 4, chacune des parois supérieure et inférieure 124a et 125a possède une forme courbe, sensiblement hémicylindrique, les parois supérieure et inférieure 124a et 125a convergeant vers l'ouverture de sortie 131. La paroi supérieure 124a a pour fonction de dévier vers le bas un flux d'air circulant à l'intérieur du boîtier 12, lorsque ce flux d'air vient impacter ladite paroi supérieure 124a. De manière similaire, la paroi inférieure 125a a pour fonction de dévier vers le haut un flux d'air circulant à l'intérieur du boîtier 12, lorsque ce flux d'air vient impacter ladite paroi inférieure 125a.

Comme représentée sur la figure 5, chacune des parois latérales gauche 124b, 125b et droite 124c, 125c possède un profil rectiligne, les parois 124b et 124c, respectivement 125b et 125c, divergeant l'une de l'autre en direction de l'ouverture de sortie 131. Lesdites parois latérales 124b, 125b, 124c, 125c sont ainsi configurées pour n'induire aucune déviation du flux d'air circulant à l'intérieur du boîtier 12, lorsque ce flux d'air est maintenu dans une orientation préférentielle. Dans cette orientation préférentielle, le flux d'air peut uniquement balayer une zone conique délimitée respectivement par les parois latérales 124b, 125b, 124c, 125c.

Comme représenté sur les figures 3 à 5, les portions arrière 121 et 121' possèdent plusieurs cavités de forme sensiblement hémicylindrique définissant une série de logements 123a, 123b, 123c, 123d contigus, alignés selon une direction transversale Y, lesdits logements 123a-123d servant de support à une série d'unités d'orientation d'un flux d'air 20a, 20b, 20c, 20d, chacune desdites unités 20a-20d étant munie d'ailettes de conduite d'air 261, 262, 263 destinées à orienter le flux d'air en provenance de l'ouverture d'entrée 111 selon une direction interne de circulation Di. En fonction de l'orientation des ailettes de conduite d'air, le flux d'air est dirigé soit vers le haut, en direction de la paroi supérieure 124a, soit vers le bas, en direction de la paroi inférieure 125a, soit horizontalement. Dans le premier cas, représenté sur la figure 4, le flux d'air est alors réorienté au contact de la paroi supérieure 124a et sort au niveau de l'ouverture de sortie 131 selon une direction de sortie Ds orientée vers le bas. Dans le deuxième cas (non représenté), le flux d'air est alors réorienté au contact de la paroi inférieure 125a et sort au niveau de l'ouverture de sortie 131 selon une direction de sortie Ds orientée vers le haut. Dans le troisième cas (non représenté), le flux d'air, n'entrant pas en contact avec les parois supérieure et inférieure 124a, 125a, conserve sa direction interne de circulation Di et, comme représenté sur la figure 5, ce flux d'air, n'entrant pas non plus en contact avec les parois latérales gauche et droite 124b, 124c, 125b, 125c, sort au niveau de l'ouverture de sortie 131 selon une direction de sortie Ds qui est identique à celle de sa direction interne Di de circulation. De manière générale, les parois latérales gauche et droite 124b, 124c, 125b, 125c n'impacteront pas sur la direction de sortie Ds du flux d'air tant que la direction interne Di définie par les ailettes de conduite d'air sera maintenue dans une fourchette d'inclinaison α1-α2 avec la direction longitudinale X, α1 correspondant à l'inclinaison des parois latérales gauche 124b, 125b et α2 correspondant à l'inclinaison des parois latérales droites 124c, 125c.

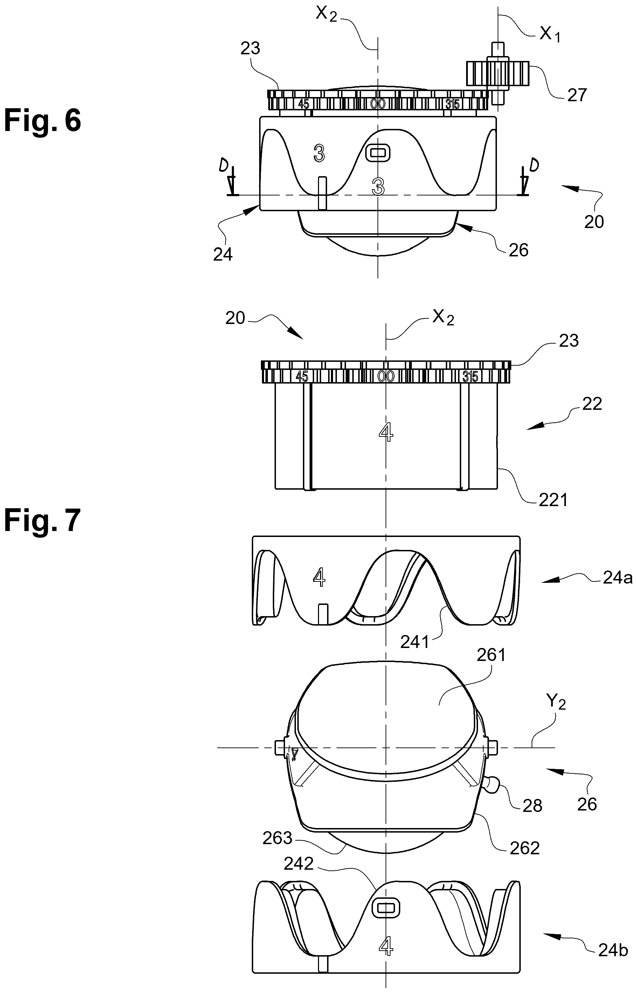

Chacune des unités d'orientation d'un flux d'air 20a-20d possède une configuration identique illustrée sur les figures 6 et 7. Dans cette configuration, une unité d'orientation d'un flux d'air 20 comprend un corps cylindrique 22 creux muni sur un pourtour périphérique externe 221 d'une couronne dentée 23, ladite couronne dentée 23 étant munie de dents destinées à coopérer avec les dents correspondantes d'une roue dentée 27 mue en rotation autour d'un axe X1, soit de manière directe, soit via un engrenage, par un axe de sortie d'un moteur 14 (illustré sur les figures 1 et 3) de manière à provoquer un déplacement pivotant du corps cylindrique 22 autour d'un axe de pivotement X2. Ainsi, dans la configuration spécifique de la figure 3, le corps cylindrique 22 de l'unité 20a pivote sous l'action d'une roue dentée 27 qui est mue en rotation de manière directe par l'axe de sortie du moteur 14, tandis que chacun des corps cylindriques 22 des unités 20b-20d pivote sous l'action d'une roue dentée 27 qui est mue en rotation par l'axe de sortie du moteur 14 via un engrenage formé par une succession d'une ou plusieurs roues dentée 27 et de la ou des couronnes dentée 23 des corps cylindriques 22 qui sont disposés entre ledit corps cylindrique 22 et l'axe de sortie du moteur 14.

L'unité 20 comprend en outre une série d'ailettes de conduite d'air 261, 262, 263 disposées de manière sensiblement parallèles entre elles et écartées les unes des autres, les ailettes de conduite d'air formant une structure 26 d'un seul tenant qui est logée à l'intérieur du corps cylindrique 22 et reliée de manière pivotante à ce dernier de telle sorte qu'elles pivotent autour d'un axe de pivotement Y2, qui est perpendiculaire à l'axe de pivotement X2 du corps cylindrique 22.

L'unité 20 comprend par ailleurs une coque externe 24 sensiblement cylindrique qui entoure au moins partiellement le corps cylindrique 22, ladite coque externe 24 étant formée d'une partie supérieure 24a et d'une partie inférieure 24b. La partie supérieure 24a possède un bord inférieur 241 décrivant une courbe sinusoïdale et la partie inférieure 24b possède un bord supérieur 242 décrivant une courbe sinusoïdale qui est complémentaire de celle décrite par le bord inférieur 241 de telle sorte que les parties supérieure et inférieure 24a, 24b s'emboitent l'une dans l'autre. Les parties supérieure et inférieure 24a, 24b pourront être reliées ensemble au niveau desdits bords inférieur et supérieur 241, 242.

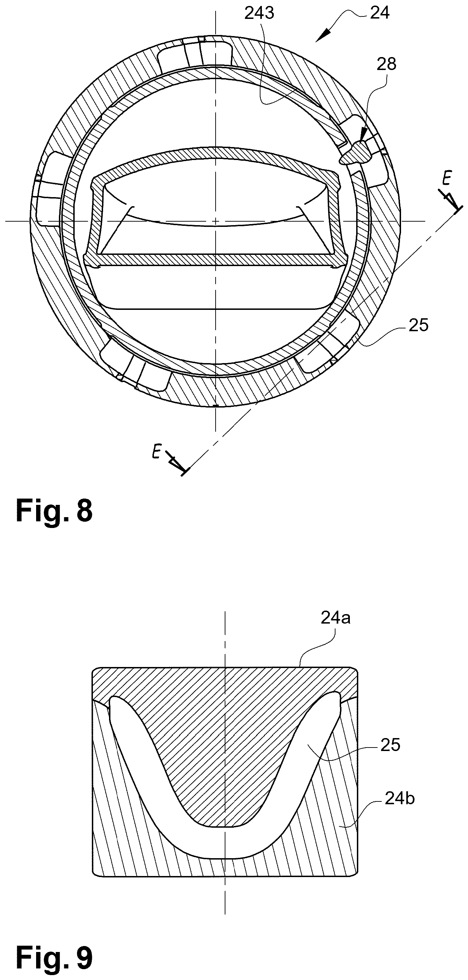

Comme représenté sur les figures 8 et 9, la coque externe 24 est munie d'une rainure de guidage 25 sur un pourtour périphérique interne 243. La rainure de guidage 25 s'étend de part et d'autre du bord inférieur 241 et du bord supérieur 242. Dans le mode de réalisation représenté, la rainure de guidage 25 oscille de manière sinusoïdale autour d'un cercle formant une ligne directrice pour la forme cylindrique définie par la coque externe 24. Un pion de manoeuvre 28 solidaire de l'ailette de conduite d'air 263 est reçu de manière coulissante à l'intérieur de la rainure de guidage 25, de sorte que la rainure de guidage 25 définit un profil de came pour le pion de manoeuvre 28. Ainsi, lors du pivotement du corps cylindrique 22 autour de l'axe X2, le pion de manoeuvre 28 suit le profil de came, provoquant ainsi le pivotement de la structure 26 d'un seul tenant autour de l'axe Y2. Pour permettre la circulation du pion de manoeuvre 28 à l'intérieur de la rainure de guidage 25, le corps cylindrique 22 est avantageusement muni d'une fente 222 dans laquelle vient se loger partiellement le pion de manoeuvre 28, le pion de manoeuvre 28 possédant une portion d'extrémité dépassant du pourtour périphérique externe 221 du corps cylindrique 22, ladite portion d'extrémité étant en contact avec au moins l'un des bords de la rainure de guidage 25.

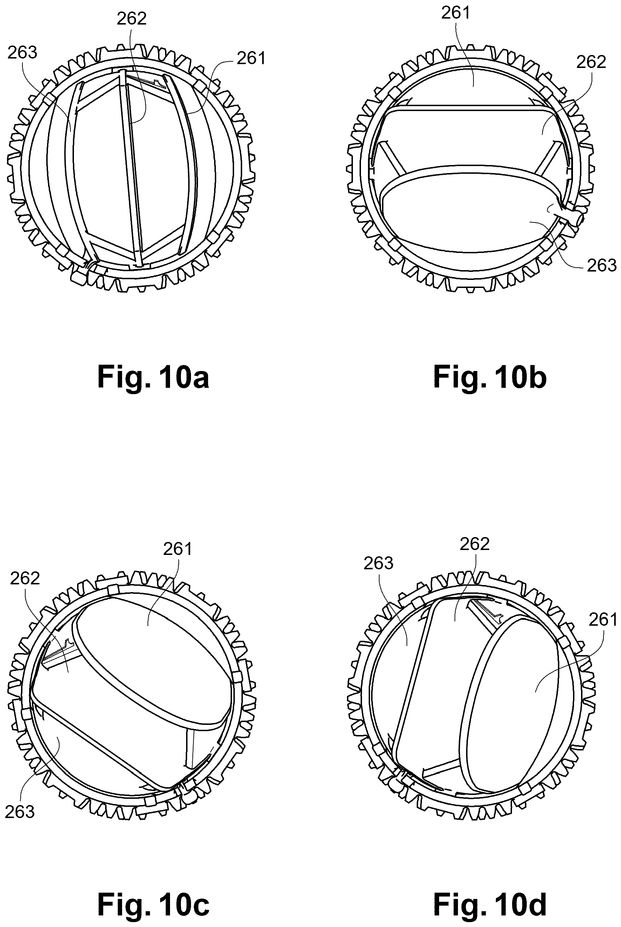

Ainsi configurée, l'unité d'orientation d'un flux d'air 20 peut générer un déplacement contrôlé des ailettes de conduite d'air 261, 262 et 263 sous l'action du moteur 14 de telle sorte que leur orientation varie par rapport à une orientation de référence, qui, par convention, pourra correspondre à une position dans laquelle elles sont parallèles à un plan vertical. Cette orientation de référence est par exemple représentée sur la figure 10a. Cette orientation de référence induit une direction de sortie Ds pour le flux d'air qui est dirigé vers l'avant en étant aligné avec la direction longitudinale X.

Une autre orientation possible des ailettes de conduite d'air 261-263 est représentée sur la figure 10b. Dans cette orientation, les ailettes 261-263 sont inclinées vers le haut par rapport à un plan horizontal. Cette orientation induit une direction de sortie Ds pour le flux d'air qui est dirigé vers l'avant et vers le bas.

Une autre orientation possible des ailettes de conduite d'air 261-263 est représentée sur la figure 10c. Dans cette orientation, les ailettes 261-263 sont inclinées vers le bas et vers la droite. Cette orientation induit une direction de sortie Ds pour le flux d'air qui est dirigé vers la droite et vers le haut.

Une autre orientation possible des ailettes de conduite d'air 261-263 est représentée sur la figure 10d. Dans cette orientation, les ailettes 261-263 inclinées vers la droite par rapport à un plan vertical. Cette orientation induit une direction de sortie Ds pour le flux d'air qui est dirigé vers l'avant et vers la droite.

Ces exemples d'orientation des ailettes 261-263 correspondent chacun à une position angulaire spécifique du corps cylindrique 22 par rapport à une position de référence. Pour permettre à un utilisateur de connaître l'orientation des ailettes 261-263 de l'unité 20, il sera avantageux d'équiper le véhicule d'un écran de contrôle ou tout autre moyen d'affichage sur lequel la direction de sortie Ds du flux d'air sera visible pour un usager assis en face de l'ouverture de sortie 131.

Dans la pratique, il sera possible pour le conducteur ou un passager du véhicule automobile de choisir, via l'écran de contrôle ou via tout autre moyen de saisie, une zone spécifique de son corps sur lequel il souhaite recevoir de l'air. Un calculateur, connaissant la position de départ de l'aérateur, va alors déterminer le déplacement rotatif que doit effectuer le corps cylindrique 22 pour atteindre la position qui permettra de diffuser de l'air dans la direction de sortie Ds la plus proche possible de celle souhaitée par le conducteur ou le passager. Une unité de commande, relié audit calculateur, pourra ainsi contrôler le moteur 14 de manière à induire un mouvement correspondant du corps cylindrique 22.

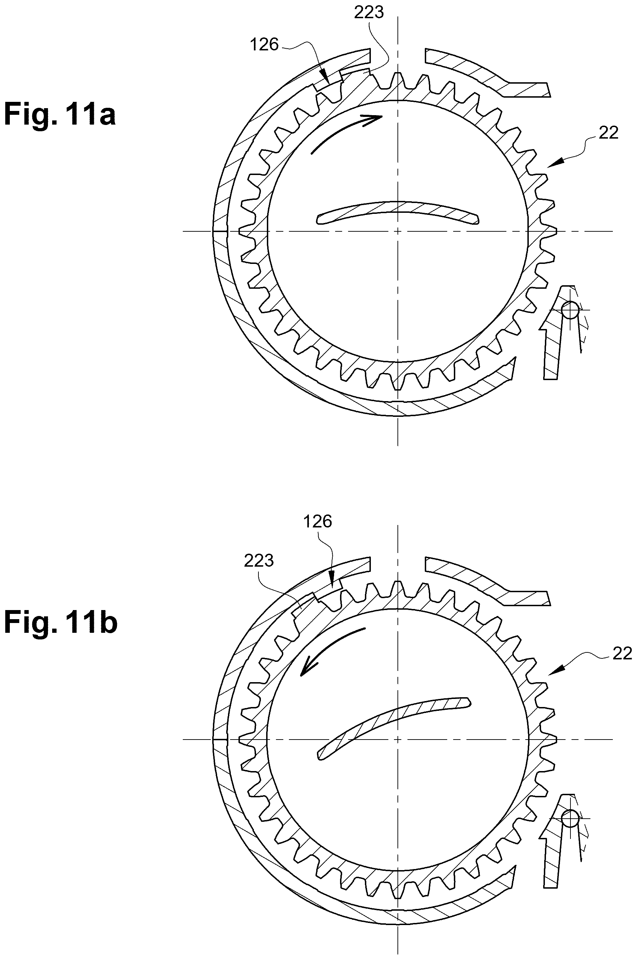

Selon une autre variante d'utilisation de l'invention, les ailettes de conduite d'air 261-263 pourront passer successivement et de manière ininterrompue de leur orientation de référence à plusieurs orientations préférentielles avantageusement choisies pour produire un balayage du flux d'air sur certaines zones spécifiques du conducteur ou d'un passager du véhicule automobile (par exemple la tête, le cou, les épaules, la poitrine, etc...), puis revenir à leur orientation de référence après un cycle de déplacement. Ce cycle de déplacement pourra être exécuté de manière automatisée au moyen du moteur 14 et de l'unité de commande susmentionnée de manière à induire un mouvement aller-retour du corps cylindrique 22 depuis sa position de référence jusqu'à une position limite. Le mouvement aller correspondra à une rotation du corps cylindrique 22 d'un angle prédéfini depuis la position de référence et selon un sens donné, le mouvement retour correspondant à une rotation inverse du corps cylindrique 22 du même angle prédéfini depuis la position limite. Cet angle prédéfini pourra notamment être compris entre 300° et 360°, et, de préférence, être égal à 340°. A cette fin, et comme représenté sur les figures 11a et 11b, le corps cylindrique 22 pourra être muni d'une excroissance radiale 223, laquelle sera définie par deux bords d'extrémité. Ces bords d'extrémité seront configurés pour venir en butée contre une nervure 126 dépassant de la paroi interne du boîtier 12 lorsque la position limite et/ou la position de référence du corps cylindrique 22 sont atteintes. Lors d'un contact de l'un desdits bords d'extrémité avec ladite nervure 126, le moteur électrique 14 va générer une augmentation de l'appel de courant (ou de puissance) qui sera détectée par l'unité de commande. L'unité de commande en déduira ainsi la position angulaire du corps cylindrique 22 par rapport à sa position de référence et pourra alors piloter précisément la rotation du corps cylindrique 22 au moyen du moteur 14 de manière à modifier l'orientation des ailettes de conduite d'air 261-263 en fonction de la demande de l'utilisateur.

L'invention n'est évidemment pas limitée au mode de réalisation spécifique décrit ci-dessus.

En particulier, les orientations successives du flux d'air à la sortie de l'aérateur pourront évidemment varier en fonction du profil de la rainure de guidage 25 de chacune des unités d'orientation d'un flux d'air 20 et s'adapter à l'emplacement d'installation dans le tableau de bord et de la position assise du conducteur et du passager.

Il est clair également que le nombre et la forme des ailettes de conduite d'air de la structure 26 pourra également varier. Il sera également envisageable d'utiliser d'autres moyens de conduite d'air en lieu et place des ailettes de conduite d'air.

Par ailleurs, le mouvement rotatif du corps cylindrique 22 pourra être transmis par le moteur 14 par tout moyen possible, l'utilisation d'une couronne dentée 23 étant l'un des moyens possibles.

En outre, le nombre d'unités d'orientation d'un flux d'air 20 et leur disposition au sein de l'aérateur 10 pourra varier. En particulier, dans un mode de réalisation possible, l'aérateur 10 pourra ne comporter qu'une seule unité d'orientation d'un flux d'air 20.

Finalement, dans un autre mode de réalisation possible, l'aérateur 10 pourra comporter plusieurs moteurs 14 et plusieurs unités d'orientation d'un flux d'air 20, au moins l'un des moteurs 14 étant associé à une unique unité d'orientation d'un flux d'air 20 de telle sorte que les unités d'orientation d'un flux d'air 20 pourront induire plusieurs directions de sortie Ds différentes pour le flux d'air.

## Revendications

1. Unité (20) d'orientation d'un flux d'air utilisable dans un aérateur (10) pour habitacle de véhicule, comprenant une série d'ailettes de conduite d'air (261-263) disposées de manière sensiblement parallèles entre elles et écartées les unes des autres, les ailettes de conduite d'air (261-263) formant une structure (26) d'un seul tenant qui est logée à l'intérieur d'un corps cylindrique (22) creux et reliée de manière pivotante à ce dernier de telle sorte qu'elles pivotent autour d'un premier axe de pivotement (Y2), le corps cylindrique (22) pouvant pivoter autour d'un deuxième axe de pivotement (X2) sous l'action d'un moteur (14), dans laquelle une coque externe (24) entoure au moins partiellement le corps cylindrique (22), ladite coque externe (24) étant munie d'une rainure de guidage (25) sur un pourtour périphérique interne (243), ladite rainure de guidage (25) définissant un profil de came, et dans laquelle un pion de manoeuvre (28) solidaire de l'une des ailettes de conduite d'air est reçu de manière coulissante à l'intérieur de la rainure de guidage (25) de telle sorte que, lors du pivotement du corps cylindrique (22) autour du deuxième axe de pivotement (X2), le pion de manoeuvre (28) suit le profil de came, provoquant ainsi le pivotement de la structure (26) d'un seul tenant autour du premier axe de pivotement (Y2).

2. Unité (20) d'orientation d'un flux d'air selon la revendication 1, dans laquelle le corps cylindrique (22) est muni sur un pourtour périphérique externe (221) d'une couronne dentée (23), ladite couronne dentée (23) étant apte à interagir avec une roue dentée (27) mue en rotation par le moteur (14) de manière directe ou via un engrenage de manière à provoquer un déplacement pivotant du corps cylindrique (22) autour du deuxième axe de pivotement (X2).

3. Unité (20) d'orientation d'un flux d'air selon la revendication 1 ou 2, dans laquelle la coque externe (24) possède une forme cylindrique.

4. Unité (20) d'orientation d'un flux d'air selon la revendication 3, dans laquelle la coque externe (24) est formée d'une partie supérieure (24a) et d'une partie inférieure (24b), lesdites parties supérieure et inférieure (24a, 24b) étant reliées ensemble au niveau d'un bord inférieur (241) de la partie supérieure (24a) et d'un bord supérieur (242) de la partie inférieure (24b).

5. Unité (20) d'orientation d'un flux d'air selon la revendication 4, dans laquelle le bord inférieur (241) de la partie supérieure (24a) et le bord supérieur (242) de la partie inférieure (24b) possèdent une forme complémentaire de telle sorte que les parties supérieure et inférieure (24a, 24b) s'emboitent l'une dans l'autre.

6. Unité (20) d'orientation d'un flux d'air selon la revendication 5, dans laquelle la rainure de guidage (25) s'étend de part et d'autre du bord inférieur (241) de la partie supérieure (24a) et du bord supérieur (242) de la partie inférieure (24b).

7. Unité (20) d'orientation d'un flux d'air selon l'une des revendications 3 à 6, dans laquelle la rainure de guidage (25) possède une forme sensiblement sinusoïdale, la rainure de guidage (25) oscillant autour d'un cercle formant une ligne directrice pour la forme cylindrique définie par la coque externe (24).

8. Unité (20) d'orientation d'un flux d'air selon la revendication 7, dans laquelle le corps cylindrique (22) est muni d'une fente (222) dans laquelle est logée partiellement le pion de manoeuvre (28), le pion de manoeuvre (28) possédant une portion d'extrémité dépassant du pourtour périphérique externe (221) du corps cylindrique (22), ladite portion d'extrémité étant en contact avec au moins l'un des bords de la rainure de guidage (25).

9. Aérateur (10) pour habitacle de véhicule automobile comprenant :
- un boîtier (12) possédant au moins une ouverture d'entrée d'air (111) et au moins une ouverture de sortie d'air (131) et à travers lequel circule un flux d'air,
- des moyens d'orientation (20) aptes à orienter le flux d'air selon au moins une direction de sortie (Ds),
dans lequel les moyens d'orientation comprennent au moins une unité (20) d'orientation d'un flux d'air selon l'une des revendications 1 à 8.

10. Aérateur (10) selon la revendication 9, dans lequel les moyens d'orientation comprennent plusieurs unités (20) d'orientation d'un flux d'air selon l'une des revendications 1 à 8.

11. Aérateur (10) selon la revendication 10, dans lequel le corps cylindrique (22) de chacune des unités (20) d'orientation d'un flux d'air est muni sur un pourtour périphérique externe (221) d'une couronne dentée (23), ladite couronne dentée (23) étant apte à interagir avec une roue dentée (27) mue en rotation par un moteur (14) de manière directe ou via un engrenage formé par une succession d'une roue dentée (27) s'engrenant avec une couronne dentée (23) d'une autre unité (20) d'orientation d'un flux d'air de manière à provoquer un déplacement pivotant simultané des corps cylindriques (20) de l'ensemble des unités (20) d'orientation d'un flux d'air au moyen d'un unique moteur (14).

12. Aérateur (10) selon l'une des revendications 9 à 11, dans lequel le boîtier (12) comprend au moins une paroi déflectrice (124a, 125a) apte à recevoir un flux d'air en provenance d'au moins une unité (20) d'orientation d'un flux d'air et à réorienter ce flux d'air selon au moins une direction de sortie (Ds).

13. Aérateur (10) selon la revendication 12, dans lequel le boîtier (12) comprend une paroi déflectrice supérieure (124a) et une paroi déflectrice inférieure (125a), ladite paroi déflectrice supérieure (124a), respectivement inférieure (125a), étant apte à recevoir un flux d'air montant, respectivement descendant, en provenance d'au moins une unité (20) d'orientation d'un flux d'air et à réorienter ce flux d'air selon une direction de sortie (Ds) orientée vers le bas, respectivement orientée vers le haut.

14. Véhicule automobile comprenant un aérateur (10) selon l'une des revendications 9 à 13.
